# EUROPEAN PATENT SPECIFICATION

(11) **EP 1 601 091 B1**
(45) Date of publication and mention of the grant of the patent: **09.09.2020**
(21) Application number: 05011199.6
(22) Date of filing: 24.05.2005
(51) Int. Cl.: H02M 3/155, H02M 3/156

(54) **Control circuit for a polarity inverting buck-boost DC-DC converter**
STEURSCHALTUNG FUR EIN EN POLARITÄTS- INVERTIERENDEN AUFWÄRTS- UND ABWÄRTS DC-DC WANDLER
CIRCUIT DE COMMANDE POUR CONVERTISSEUR ELEVATEUR-ABAISSEUR DE TENSION DE COURANT CONTINU A POLARITE INVERSEE

(30) Priority: 28.05.2004 DE 102004026710
(43) Date of publication of application: 30.11.2005
(73) Proprietor: TEXAS INSTRUMENTS DEUTSCHLAND GMBH, 85356 Freising (DE)
(72) Inventor: Prexl, Franz, 85445 Niederding (DE); Reithmaier, Stefan, 84186 Vilsheim (DE); Scoones, Kevin, 80639 München (DE)
(74) Representative: Zeller, Andreas

(56) References cited:
- US-A- 5 170 333
- JIAN SUN ED - INSTITUTE OF ELECTRICAL AND ELECTRONICS ENGINEERS: "Analysis and design of single-phase PFC converters for airborne systems", IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003; [ANNUAL CONFERENCE OF THE IEEE INDUSTRIAL ELECTRONICS SOCIETY], NEW YORK, NY : IEEE, US, vol. 2, 2 November 2003 (2003-11-02), pages 1101-1109, XP010691208, DOI: 10.1109/IECON.2003.1280199 ISBN: 978-0-7803-7906-0
- LAU C K ET AL: "DSP based fuzzy controlled power converter operating in both continuous and discontinuous conduction modes", INDUSTRIAL ELECTRONICS, CONTROL, AND INSTRUMENTATION, 1996., PROCEEDIN GS OF THE 1996 IEEE IECON 22ND INTERNATIONAL CONFERENCE ON TAIPEI, TAIWAN 5-10 AUG. 1996, NEW YORK, NY, USA,IEEE, US, vol. 3, 5 August 1996 (1996-08-05), pages 1530-1535, XP010203323, DOI: 10.1109/IECON.1996.570611 ISBN: 978-0-7803-2775-7

## Description

The present invention relates to a control circuit for a polarity inverting buck-boost DC-DC converter in CMOS technology.

A polarity inverting buck-boost DC-DC converter is one that converts a DC input to a DC output of lower or higher voltage level and opposite polarity with respect to the DC input. Conventionally, a voltage mode converter of this kind includes three regulation and control circuits that act in parallel to maintain an output voltage at the desired level. Each of these circuits contributes to a charge current for a capacitor that is connected to a first input of an operational amplifier the second input of which is connected to a reference voltage source. The output of the operational amplifier is a pulse signal with a variable duty cycle. A first circuit supplies a current contribution in response to the sensed voltage difference between the input and output of the converter. A second circuit supplies a current contribution in response to a voltage difference sensed between the output voltage and a reference voltage and includes a compensation capacitor. The compensation capacitor delays the action of the second circuit. A third circuit also supplies a current contribution in response to a voltage difference sensed between the output voltage and a reference voltage. The third circuit makes a smaller, but faster, contribution to the charge current. This regulation concept is a compromise between fast transient response and stability.

The present invention mainly relates to the second out of the three control circuits.

For this second control circuit, a relatively large compensation capacitor usually is needed in continuous mode of the converter. The high capacitance of a large compensation capacitor, however, makes load regulation very bad in discontinuous mode of the converter. As is known, the inductor current increases in the ON phase and decreases in the OFF phase of each clock cycle. In the continuous mode, the inductor current never decreases to zero in the OFF phase. When the average inductor current gets small, and the inductor current reaches zero in the OFF phase and remains zero to the end of the OFF phase. This is called the discontinuous mode. There are solutions that do not allow discontinuous mode, but all these solutions accept reduced efficiency in the discontinuous mode.

Also, it is not possible to implement such a circuit in a polarity inverting buck-boost converter, because only PMOS devices can be applied to a negative voltage and these have to be controlled by negative voltages without any NMOS transistors. There is no acceptable solution for this problem.

One prior art solution proposing the switch between different frequency compensation circuits in continuous and discontinuous mode controlled by a continuous-discontinuous mode detection circuit is known from US5170333A.

The present invention relates to a control circuit for a polarity inverting buck-boost DC-DC converter according to claim 1. It assumes that in discontinuous mode, a smaller capacitor would be sufficient to achieve stability. Accordingly, the invention proposes to switch between a high capacitance for the continuous mode and low capacitance for the discontinuous mode of the converter. Load regulation becomes much better since the small capacitor can be charged much faster in discontinuous mode.

In order to avoid significant transition problems, the voltage across the large capacitor has to have the correct start value whenever it is switched back into the regulation loop again.

A fast but low power buffer amplifier is also proposed to be used in the preferred embodiment of the invention. The buffer amplifier ensures that the voltage across the large capacitor always follows the voltage across the small capacitor. This avoids any problem on switching back to the continuous mode. The small capacitor is connected permanently so that its voltage is correct anyway at the transition to discontinuous mode.

Further advantages and features of the invention will appear from the appending claims and from the following description with reference to the appending drawings. In the drawings:
Fig. 1 is a block diagram of a polarity inverting buck-boost DC-DC converter;
Fig. 2 is a block diagram of a control circuit for the converter in Fig. 1; and
Fig. 3 is a circuit diagram of a buffer amplifier used in the control circuit.

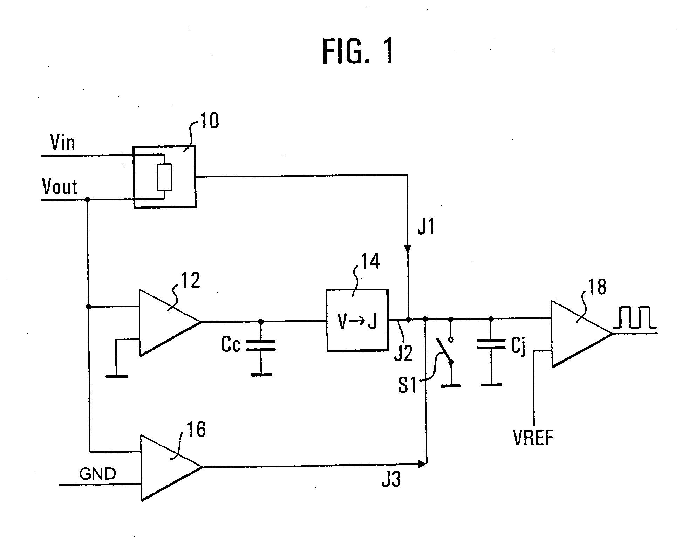

With reference to Fig. 1, the converter shown therein includes a first control circuit 10 that supplies a charge current J1 in response to a voltage difference sensed between input terminals Vin and Vout. A second control circuit includes an operational trans-conductance amplifier 12 that has inputs connected to terminal Vout and to ground, respectively, and an output connected to an input of a voltage/current converter 14. A compensation capacitor Cc is connected from the interconnection node of amplifier 12 and converter 14 to ground. Voltage/current converter 14 supplies a current J2. A third control circuit comprises an error amplifier 16 that has inputs connected to terminal Vout and a to ground GND, respectively, and an output that supplies a current J3.

Currents J1, J2 and J3 add up to a charge current for a capacitor Cj connected between a first input of an operational amplifier 18 and ground. A switch S1 controlled by a pulse generator of fixed frequency (not shown) is connected across capacitor Cj. The second input of amplifier 18 is connected to a reference voltage source VREF. The output of amplifier 18 is a pulse signal with a duty cycle which is adjusted by the three control loops to keep the output voltage of the converter on the desired level.

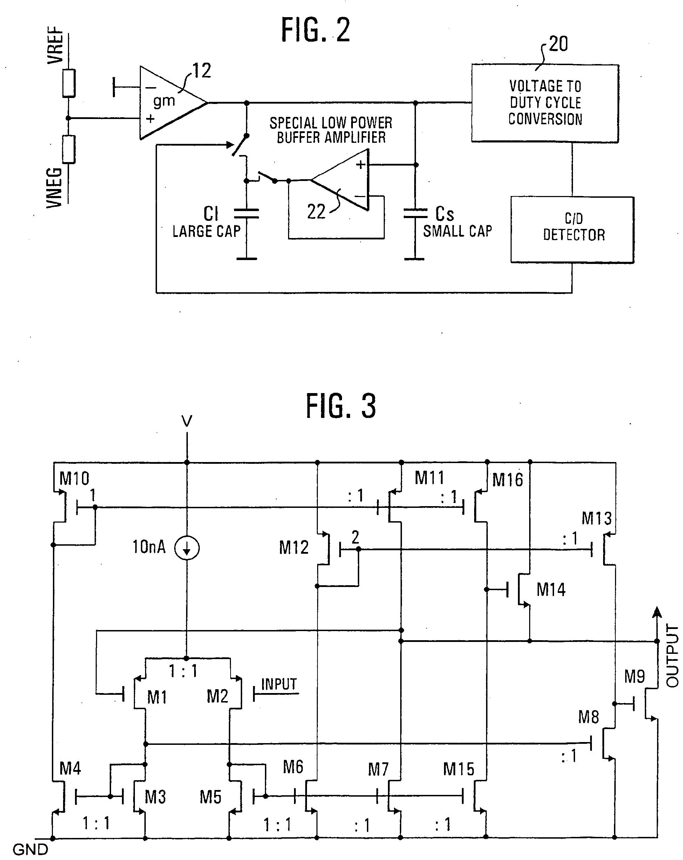

As seen in Fig. 2, the operational trans-conductance amplifier 12 has a first input connected to ground and a second input connected to re resistive voltage divider connected between terminals VREF and VNEG (negative output). The output of amplifier 12 is connected to an input of a voltage-to-duty cycle converter 20, and a compensation capacitance is connected from the output of amplifier 12 to ground. The compensation capacitance here is composed of a small capacitor Cs and a relatively large capacitor Cl. Only the small capacitor Cs is permanently connected from the output of amplifier 12 to ground. The larger capacitor Cl is connected through a switch S2. The switch S2 is controlled by a continuous/discontinuous mode detection circuit 18. A buffer amplifier 22 formed by the differential amplifier of Fig. 3 has a non-inverting input connected to capacitor Cs and an output looped back to the inverting input and connected to capacitor Cl. Accordingly, amplifier 22 has gain 1 so that the voltage at capacitor Cl closely traces that at capacitor Cs.

The voltage across the compensation capacitor has to rise when the load increases and falls on the way to discontinuous mode. The buffer amplifier shown in figure 3 is very fast but does not have the usual drawback of high current consumption. The idea is to implement a dead zone where both output transistors M9 and M14 are definitely off to avoid cross-current between the supply terminals. As a result, the amplifier is very fast, but has an offset or a range where the output is almost in a high impedance state. But this is no problem if the offset realized in the current manner. It has to be negative. On the way from discontinuous to continuous mode of the converter, the voltage across the large capacitor perfectly follows the voltage across the small capacitor. Even if the voltage across the small capacitor is not perfectly stable or noisy, the amplifier output forces the large capacitor voltage to the peak voltage. Thus the voltage across the large capacitor is either correct or a bit too high which is just an additional benefit into the right direction. This concept has proven to work fine down to fast load changes in the 100µs range.

Due to this concept, it is possible to use a polarity inverting buck-boost converter in continuous and discontinuous mode in a variety of applications.

With reference now to Fig. 3, the buffer amplifier 22 includes a differential input stage with transistors M1 and M2 the interconnected drains of which are connected to a common current source S which, in the particular example provides a current of 10 nA from supply terminal V. The drains of transistors M1 and M2 are connected to ground GND via diode-connected transistors M3 and M5, respectively. The gate of transistor M1 is connected to the output of the amplifier, and the gate of transistor M2 is the non-inverting input of the amplifier. Transistor M4, series-connected with diode-connected transistor M10, mirrors the current through transistor M3, and transistors M6, M7, M15 are connected as current mirrors with respect to the current through transistor M5. Transistor M6, however, is connected in series with diode-connected transistor M12, which is of twice the dimension of transistor M13. The current through transistor M12 is again mirrored by transistor M13 connected in series with transistor M8 between supply terminal V and ground GND. Transistor M8 has its gate connected to the drain of transistor M1 and its drain connected to the gate of a large transistor M9 which has its drain connected to the output of the amplifier and its source connected to ground GND. Another large transistor M14 is connected between supply terminal V and the output of the amplifier and has its gate connected to a node connecting the drains of transistors M15 and M16 connected in series between supply terminal V and ground GND. Transistor M16 has its gate connected to the gate of transistor M10, just as transistor M11 which has its source connected to supply terminal V and its drain connected to the output of the amplifier. Transistor M7 also has its drain connected to the output of the amplifier.

In operation of the buffer amplifier in Fig. 3, either transistor M14 or transistor M9 is conducting, each of which has a high current capacity due to its size.

## Claims

1. A control circuit for a polarity inverting buck-boost DC-DC converter, comprising an operational trans-conductance amplifier (12) that has inputs to which a sensed voltage difference signal is applied and an output connected to an input of a voltage-to-duty-cycle converter (20), and a compensation capacitance connected between the output of the amplifier and a fixed supply terminal, wherein the compensation capacitance comprises a first capacitor (Cs) that is permanently connected between the output of the amplifier and the fixed supply terminal and a second capacitor (Cl) that has a switched connection between the output of the amplifier (12) and the fixed supply terminal, the first capacitor (Cs) having a small capacitance compared to the second capacitor (Cl), and the switched connection of the second capacitor being controlled by a continuous-discontinuous mode detection circuit; and
a buffer amplifier (22) with an input connected to the first capacitor and an output connected to the second capacitor.

2. The control circuit of claim 1, wherein the buffer amplifier (22) has an output stage with two MOS output transistors (M9,M14) each connected between the output and one of two supply terminals (V, GND), and a biasing circuit that drives both output transistors (M9, M14) so that only one of the two is conductive at a time, thereby avoiding a transverse current.

## Patentansprüche

1. Steuerschaltung für einen Polarität invertierenden Abwärts-Aufwärts-DC-DC-Wandler, umfassend einen Transkonduktanz-Operationsverstärker (12), der Eingänge, an denen ein erfasstes Spannungsdifferenzsignal angelegt ist, und einen Ausgang, der mit einem Eingang eines Spannung-zu-Tastverhältnis-Wandlers (20) verbunden ist, aufweist, und
eine Kompensationskapazität, die zwischen den Ausgang des Verstärkers und einen Festversorgungsanschluss geschaltet ist, wobei die Kompensationskapazität einen ersten Kondensator (Cs), der permanent zwischen den Ausgang des Verstärkers und den Festversorgungsanschluss geschaltet ist, und einen zweiten Kondensator (Cl), der eine geschaltete Verbindung zwischen dem Ausgang und dem Verstärker (12) und dem Festversorgungsanschluss aufweist, umfasst, wobei der erste Kondensator (Cs) im Vergleich zu dem zweiten Kondensator (Cl) eine kleine Kapazität aufweist und die geschaltete Verbindung des zweiten Kondensators durch eine Detektionsschaltung für einen kontinuierlichen-diskontinuierlichen Modus gesteuert wird; und
einen Pufferverstärker (22) mit einem Eingang, verbunden mit dem ersten Kondensator, und einem Ausgang, verbunden mit dem zweiten Kondensator.

2. Steuerschaltung nach Anspruch 1, wobei der Pufferverstärker (22) eine Ausgangsstufe mit zwei MOS-Ausgangstransistoren (M9, M14), die jeweils zwischen den Ausgang und einen von zwei Versorgungsanschlüssen (V, GND) geschaltet sind, und eine Vorspannungsschaltung, die beide Ausgangstransistoren (M9, M14) treibt, so dass nur einer der zwei zurzeit leitet, wodurch ein Querstrom vermieden wird, aufweist.

## Revendications

1. Circuit de commande pour un convertisseur continu-continu abaisseur-élévateur inverseur de polarité, comprenant un amplificateur opérationnel à transconductance (12) présentant des entrées auxquelles est appliqué un signal de différence de tension détectée et une sortie connectée à une entrée d'un convertisseur tension-rapport cyclique (20), et une capacité de compensation connectée entre la sortie de l'amplificateur et une borne d'alimentation fixe, la capacité de compensation comprenant un premier condensateur (Cs) qui est connecté en permanence entre la sortie de l'amplificateur et la borne d'alimentation fixe et un deuxième condensateur (C1) qui présente une connexion commutée entre la sortie de l'amplificateur (12) et la borne d'alimentation fixe, le premier condensateur (Cs) présentant une faible capacité par rapport à celle du deuxième condensateur (C1), et la connexion commutée du deuxième condensateur étant commandée par un circuit de détection de mode continu-discontinu ; et
un amplificateur tampon (22) pourvu d'une entrée connectée au premier condensateur et d'une sortie connectée au deuxième condensateur.

2. Circuit de commande selon la revendication 1, dans lequel l'amplificateur tampon (22) présente un étage de sortie pourvu de deux transistors MOS de sortie (M9, M14) dont chacun est connecté entre la sortie et l'une de deux bornes d'alimentation (V, GND), et un circuit de polarisation qui attaque les deux transistors de sortie (M9, M14) de façon à ce qu'un seul des deux soit passant à la fois de manière à éviter un courant transversal.
